# FASCICULE DE BREVET EUROPEEN

(11) **EP 3 839 997 B1**
(45) Date de publication et mention de la délivrance du brevet: **26.07.2023**
(21) Numéro de dépôt: 20215137.9
(22) Date de dépôt: 17.12.2020
(51) Int. Cl.: H01H 9/26, H01H 9/40, H01H 71/10

(54) **SYSTÈME DE PROTECTION ÉLECTRIQUE MULTIPOLAIRE ET INSTALLATION ÉLECTRIQUE COMPRENANT UN TEL SYSTÈME**
MEHRPOLIGES ELEKTRISCHES SCHUTZSYSTEM UND ELEKTRISCHE ANLAGE MIT EINEM SOLCHEN SYSTEM
MULTIPOLAR ELECTRICAL PROTECTION SYSTEM AND ELECTRICAL INSTALLATION COMPRISING SUCH A SYSTEM

(30) Priorité: 18.12.2019 FR 1914942
(43) Date de publication de la demande: 23.06.2021
(73) Titulaire: Schneider Electric Industries SAS, 92500 Rueil-Malmaison (FR)
(72) Inventeur: RIVAL, Marc, 38000 GRENOBLE (FR); DOMENECH, Cyril, 38000 GRENOBLE (FR); DYE, Stephane, 38000 GRENOBLE (FR); ROTA, Daniel, 38000 GRENOBLE (FR)
(74) Mandataire: Lavoix

(56) Documents cités:
- EP-A1- 0 957 500
- EP-A1- 1 453 073
- EP-A1- 3 125 266
- EP-A1- 3 499 659
- EP-A2- 2 284 851

## Description

La présente invention concerne un système de protection électrique multipolaire, et une installation électrique comprenant un tel système.

Les systèmes de protection électrique tels que les disjoncteurs sont des appareils de coupure permettant de canaliser et dissiper l'arc électrique susceptible de se former lors de l'ouverture d'un circuit électrique. Lorsqu'un disjoncteur est apte à ouvrir conjointement plusieurs circuits électriques correspondant à plusieurs phases électriques, dites aussi pôles, on parle de disjoncteur multipolaire.

Les disjoncteurs sont généralement conçus pour un calibre donné, c'est-à-dire pour une gamme de courant et/ou de puissance électrique donnés.

Cependant, l'évolution des besoins en matière de disjoncteur, notamment en lien avec la production d'énergie éolienne et l'augmentation de taille des éoliennes, demande aujourd'hui des disjoncteurs capables de gérer des courants d'intensité très élevées, allant jusqu'à 10 kA voire 12 kA, et dans le domaine dit de « basse tension », par exemple entre des tensions pouvant atteindre entre 690V et 1200V.

Les approches traditionnelles de fabrication de disjoncteurs modulaires ne permettent plus d'obtenir des disjoncteurs aux performances acceptables, l'augmentation du nombre d'appareils de coupure élémentaires alignés les uns avec les autres causant des problèmes en terme d'encombrement et en termes d'évacuation des flux de chaleur engendrés par de tels courants électriques de très hautes intensités.

EP-1 453 073-A1 décrit par exemple un assemblage de plusieurs contacteurs électromagnétiques alignés les unes avec les autres, les contacteurs étant asservis à un déclencheur commun. Une telle structure cause cependant des problèmes en terme d'encombrement et en termes d'évacuation des flux de chaleur.

D'autres systèmes connus sont décrits dans EP 0 957 500 A1, EP 3 125 266 A1, EP 2 284 851 A2 et EP 3 499 659 A1.

C'est à ces problèmes qu'entend plus particulièrement répondre l'invention, en proposant un système de protection électrique multipolaire avec une structure compacte et modulaire, qui présente un calibre élevé par pôle et dont le déclenchement est synchronisé quel que soit le nombre de pôles.

À cet effet, l'invention concerne un système de protection électrique multipolaire selon la revendication 1.

Grâce à l'invention, les appareils de coupure, dont le déclenchement est synchronisé, peuvent être agencés de manière à évacuer les flux de chaleur associés aux courants de haute intensité. Chaque appareil de coupure est calibré en fonction de la puissance et du courant associé à chaque pôle. Le déclencheur commun permet de synchroniser entre eux le déclenchement de chaque appareil de coupure.

Selon des aspects avantageux mais non obligatoires de l'invention, un tel système de protection électrique peut incorporer une ou plusieurs des caractéristiques suivantes prises selon toute combinaison techniquement admissible :
- les premiers et deuxième connecteurs d'un appareil de coupure présentent la même structure et sont orientés suivant deux directions transversales opposées, les plots de raccordement des deux connecteurs d'un même appareil étant chacun situés dans des plans verticaux distincts les uns des autres ;
- les appareils de coupure comportent un même nombre de chambres de coupure ;
- chaque appareil de coupure comprend deux, trois ou quatre chambres de coupure ;
- chaque chambre de coupure d'un appareil de coupure débouche sur une face supérieure de l'appareil de coupure par une ouverture de dégazage respective, alors que les appareils sont espacés les uns par rapport aux autres suivant une direction orthogonale à la face supérieure de manière à laisser libre les ouvertures de dégazage des autres appareils.
- chaque appareil de coupure comporte un mécanisme de commutation pour déplacer les contacts séparables dudit appareil, lesdits mécanismes de commutation étant couplés au déclencheur ;
- le déclencheur fait partie d'une unité de commande électronique distincte des appareils de coupure ;
- le système de protection comporte des embases d'accueil, prévues pour être fixées à une installation électrique, chaque embase comprenant des raccords électriques positionnés de manière à coopérer conjointement de façon réversible avec les connecteurs d'un appareil de coupure ;
- un premier appareil de coupure comporte un actionneur et un mécanisme de commutation, les autres appareils de coupure étant couplés au premier appareil de coupure par un dispositif mécanique disposé à l'extérieur des appareils et qui relie ces appareils entre eux.
- l'appareil de coupure comportant l'actionneur comporte aussi le déclencheur, qui pilote l'actionneur.
- chaque appareil de coupure comporte un arbre de commande commun auquel sont couplés les contacts séparables, les arbres de chaque appareil étant couplés au dispositif mécanique.
- le système de protection comprend un châssis de fixation des appareils de coupure, alors que le châssis et le dispositif mécanique sont réalisés en un matériau non ferromagnétique, de préférence métallique.

L'invention sera mieux comprise, et d'autres avantages de celle-ci apparaîtront plus clairement à la lumière de la description qui va suivre, de deux modes de réalisation d'un système de protection électrique multipolaire et d'une installation électrique conformes à son principe, donnée uniquement à titre d'exemple et faite en référence aux dessins annexés, dans lesquels :
[Fig 1] la figure 1 est une vue schématique d'un système de protection électrique multipolaire conforme à des modes de réalisation et notamment à un premier mode de réalisation de l'invention ;
[Fig 2] la figure 2 est une perspective d'un système de protection électrique multipolaire conforme à un deuxième mode de réalisation de l'invention ;
[Fig 3] la figure 3 est une vue à plus grande échelle du détail III sur la figure 2, certaines pièces étant cachées pour faciliter la lecture ;
[Fig 4] la figure 4 est une perspective du système de protection de la figure 2, observé suivant la flèche IV sur la figure 2, certaines pièces étant cachées pour faciliter la lecture, et
[Fig 5] la figure 5 est une vue à plus grande échelle du système de protection de la figure 2, observé suivant la flèche V sur la figure 4.

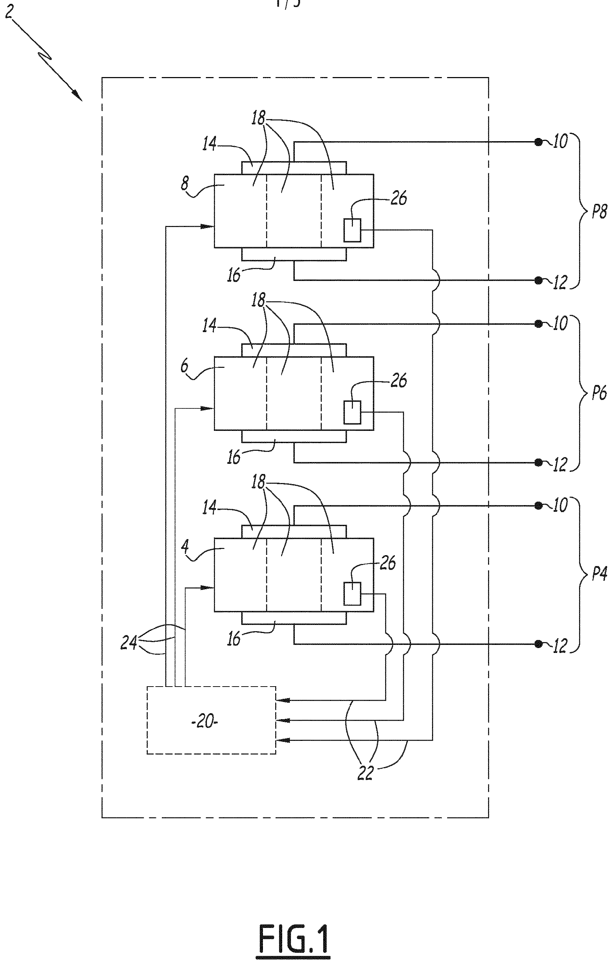

Un système de protection électrique multipolaire 2 selon de nombreux modes de réalisation est représenté en figure 1.

Le système de protection 2 comprend une pluralité d'appareils de coupure, par exemple trois, ici référencés 4, 6 et 8.

Chacun des appareils de coupure 4 à 8 est un appareil de commutation électrique qui peut interrompre un courant électrique circulant au travers de contacts séparables et qui est commutable entre un état ouvert et un état fermé.

Avantageusement, les appareils de coupure 4 à 8 sont par exemple des sous-ensembles de disjoncteur existants, et/ou comprennent des composants de disjoncteurs à basse tension existants.

Par exemple, le système de protection 2 est destiné à être utilisé dans une installation électrique, telle qu'une installation de distribution d'électricité ou de production d'électricité. Selon des exemples, une installation électrique comporte un générateur électrique, au moins une charge électrique, et un appareil de coupure 2 connecté entre le générateur et ladite charge électrique. Par exemple, le générateur peut être un aérogénérateur, notamment une éolienne.

Les appareils de coupure 4 à 8 sont séparés les uns des autres.

De préférence, les appareils de coupure du système 2 sont sensiblement identiques les uns aux autres et ont une fonction similaire de sorte que, pour simplifier, seul l'un de ces appareils de coupure est décrit en détail dans ce qui suit.

Chacun des appareils 4 à 8 est associé à un pôle électrique ou phase électrique, référencé respectivement P4, P6 et P8.

Dans des modes de réalisation alternatifs, le système 2 peut comporter un nombre différent d'appareils de coupure. Selon des exemples, le système 2 comprend deux appareils de coupure. Selon d'autres exemples, le système 2 comprend quatre appareils de coupure. En ce sens, le système de protection 2 est dit multipolaire.

Chacun des pôles P4 à P8 est associé à une borne amont 10 et à une borne aval 12. Dans la présente description, les notions de « amont » et « aval » sont utilisées pour distinguer entre les divers éléments du système de protection 2, et ne préjugent pas d'un quelconque sens de branchement des divers éléments du système de protection 2.

Pour chacun des appareils 4 à 8, la borne amont 10 est connectée à un connecteur amont 14, qui est monté sur l'appareil 4 à 8 correspondant. De façon analogue, chaque borne aval 12 est connectée à un connecteur aval 16 respectif.

Chacun des appareils 4 à 8 comprend une pluralité de compartiments 18. Avantageusement, les appareils 4 à 8 ont le même nombre de compartiments 18. Dans l'exemple illustré, chacun des appareils 4 à 8 comprend trois compartiments 18.

Chacun des compartiments 18 comprend une chambre de coupure et une paire de contacts électriques séparables, ces derniers jouxtant la chambre de coupure. Par extension, la référence 18 relative à chacun des compartiments inclut aussi la chambre de coupure logée dans ledit compartiment.

Les contacts séparables de chacune des paires sont connectés respectivement à un terminal amont ou à un terminal aval, non représentés. Les contacts séparables sont réversiblement déplaçables entre des positions ouverte et fermée.

Par exemple, les contacts séparables de chaque appareil de coupure 4 à 8 sont couplés à un arbre de commande commun à tout l'appareil. Cet arbre peut être mis en mouvement par un mécanisme de commutation, tel qu'un mécanisme à accumulation d'énergie. Ce mécanisme peut être activé au moyen d'un actionneur, tel qu'un actionneur électromécanique, notamment un actionneur électromagnétique. En pratique, cet actionneur peut être piloté par un déclencheur 20.

Lorsque tous les contacts séparables d'un des appareils de coupure 4 à 8 sont à l'état ouvert/fermé, on dit par extension que l'appareil 4 à 8 correspondant est aussi à l'état ouvert/fermé.

Pour chaque appareil 4, 6 et 8, les terminaux amont sont raccordés au même connecteur amont 14 et sont ainsi portés à un même potentiel électrique.

De façon analogue, pour chaque appareil 4 à 8, les terminaux aval sont raccordés au même connecteur aval 16 et sont ainsi portés à un même potentiel électrique.

Les appareils de coupure 4 à 8 sont reliés à un même déclencheur 20. Le déclencheur 20 est configuré pour recevoir et traiter les informations en provenance de chacun des appareils 4 à 8.

Selon des exemples, le déclencheur 20 peut être un déclencheur électronique comportant un circuit électronique et/ou un processeur, notamment programmé pour détecter d'éventuels défauts électriques à partir d'informations en provenance de chaque appareil de coupure 4 à 8, telles que des mesures de courant et/ou de tension électrique.

Par exemple, le déclencheur 20 est connecté par des liaisons de données 22 à des dispositifs de mesure 26 associés aux appareils de coupure 4 à 8. Le déclencheur 20 est en outre connecté par des liaisons de données 24 à un ou plusieurs actionneurs associés aux appareils de coupure 4 à 8 pour commuter leurs contacts électriques séparables entre leurs états ouvert et fermé.

Par exemple, les dispositifs de mesure 26 peuvent comporter un ou plusieurs capteurs de courant et/ou des capteurs de tension et/ou des capteurs configurés pour mesurer toute grandeur électrique pertinente.

Selon des exemples, le déclencheur 20 fait partie d'une unité de commande électronique, qui est aussi configurée pour transmettre des ordres de commutation, par exemple des ordres d'ouverture, de fermeture et de réarmement à destination de chacun des appareils 4 à 8.

En particulier, les ordres de déclenchement envoyés par le déclencheur 20 sont conjointement envoyés à tous les appareils de coupure 4, 6 et 8 du système de protection 2. Autrement dit, les appareils de coupure 4 à 8 sont asservis au même déclencheur 20.

Selon des exemples, un seul déclencheur 20 est associé aux différents appareils 4, 6 et 8.

Dans un premier mode de réalisation, ainsi qu'illustré sur la figure 1, le déclencheur 20 est distinct des appareils 4 à 8. Le déclencheur 20 fait par exemple partie d'une unité de commande électronique distincte des appareils 4 à 8.

En d'autres termes, l'asservissement des appareils de coupure 4 à 8 au déclencheur 20 commun est réalisé électroniquement.

Selon d'autres exemples, le déclencheur 20 peut être intégré à l'un des appareils de coupure 4 à 8, celui des appareils de coupure 4 à 8 comportant le déclencheur 20 étant alors appelé appareil de coupure « maître », tandis que les autres appareils de coupure ne comportant pas le déclencheur 20 sont appelés appareils de coupure « esclaves ».

De façon optionnelle mais néanmoins avantageuse, les appareils de coupure 4 à 8 sont débrochables, c'est-à-dire que chacun des appareils de coupure 4 à 8 coopère de façon réversible avec une embase d'accueil respective. Plus précisément, chaque embase d'accueil comprend des raccords électriques qui sont électriquement conjointement connectés de façon réversible avec les connecteurs amont et aval 14 et 16 de l'appareil 4 à 8 correspondant, par un simple mouvement de translation des appareils 4 à 8 par rapport à l'embase d'accueil respective suivant une direction de montage.

Les appareils 4 à 8 sont ainsi facilement démontables et remplaçables, par exemple lors d'une opération de maintenance.

Dans un tel cas, les liaisons de données 22 et 24 sont elles aussi débrochables, c'est-à-dire que les connexions et/ou déconnexions des liaisons 22 et 24 se font conjointement aux connexions et/ou déconnexions des connecteurs 14 et 16 lors du montage/démontage de l'appareil de coupure 4 à 8 avec une embase d'accueil respective.

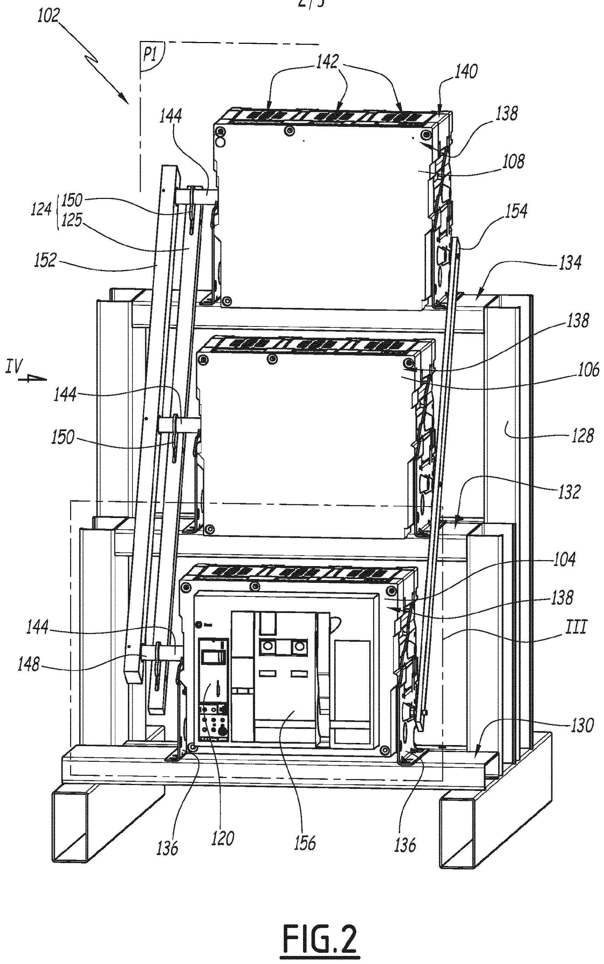

Les figures 2 à 5 illustrent un deuxième mode de réalisation du système de protection 2.

Dans le deuxième mode, les éléments analogues à ceux du premier mode de réalisation portent les mêmes références ajoutées de 100, et fonctionnent de la même façon. Par exemple, sur les figures 2 à 5, le système de protection est référencé 102. Le système 102 comporte trois appareils de coupure, référencés 104, 106 et 108, qui correspondent aux appareils de coupure 4, 6 et 8 du premier mode de réalisation représenté sur la figure 1. Cependant, là encore, le nombre d'appareils de coupure n'est pas limitatif et pourrait être différent.

Dans ce qui suit, on décrit principalement les différences entre les premier et deuxième modes de réalisation.

Le système de protection 102 diffère notamment du système de protection 2 en ce que les appareils de coupure 104 à 108 sont couplés mécaniquement entre eux pour être asservis à un même déclencheur 120, ce dernier jouant un rôle similaire ou identique à celui du déclencheur 20 précédemment décrit.

En d'autres termes, l'asservissement des appareils de coupure 104 à 108 au déclencheur 120 commun est réalisé mécaniquement, par exemple grâce à un dispositif mécanique 124 de liaison, décrit plus en détail ci-après.

Les trois appareils de coupure 104 à 108 sont montés sur un châssis 128 de fixation. Dans l'exemple illustré, le châssis 128 est formé de profilés métalliques assemblés les uns aux autres, par exemple par soudage. D'autres modes de réalisation du châssis 128 sont néanmoins possibles. Sur les vues des figures 2 à 5, le châssis 128 est représenté posé sur une surface horizontale.

Dans la suite de la description, les mentions de « haut », « bas », « devant », « derrière », « latéral », « droite », « gauche », etc., sont données en référence à l'orientation des éléments du système de protection 2 sur les dessins mais ne préjugent pas, sauf mention spécifique, d'un fonctionnement particulier du système 2.

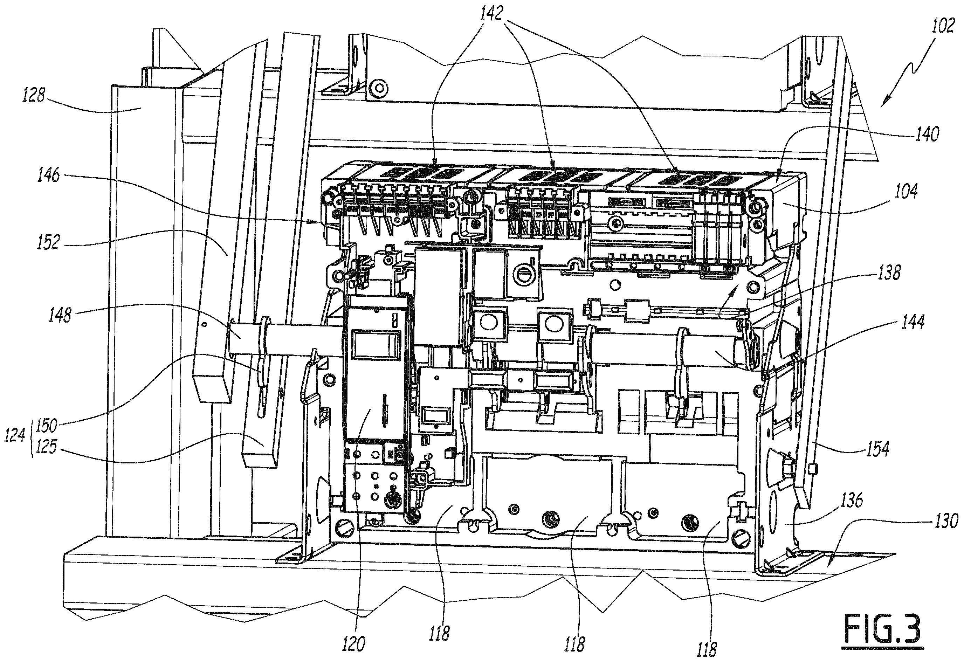

Sur les figures 3 à 5, le châssis 128 est partiellement représenté pour faciliter la lecture. Le châssis 128 comprend trois espaces de réception 130, 132 et 134 distincts les uns des autres, qui sont configurés pour accueillir un appareil de coupure 104, 106 et 108 respectif, les appareils 104 à 108 étant ainsi séparés. Chacun des espaces de réception 130 à 134 comporte ici un plateau horizontal de forme rectangulaire, les espaces 130 à 134 s'étendant dans leur longueur parallèlement les uns aux autres.

Les appareils de coupure 104 à 108 sont chacun fixés sur un espace de réception 130 à 134 respectif, au moyen de flasques 136 et d'organes de fixation non représentés.

Chacun des appareils de coupure 104 à 108 présente une forme globalement parallélépipédique, avec une face avant 138. Dans l'exemple illustré, les faces avant 138 sont situées dans un plan vertical, sont parallèles les unes aux autres et sont orientées dans le même sens, pour faciliter l'utilisation du système de protection 102. La face avant 138 de l'appareil 104 comporte divers organes de commande et/ou de contrôle accessibles à un opérateur pour utiliser le système de protection 102.

Par commodité, on définit un plan transversal P1 du système de protection 2 comme étant un plan parallèle aux faces avant 138 des appareils de coupure 104 à 108.

On définit aussi un plan longitudinal P2 comme étant un plan vertical orthogonal au plan transversal P1.

L'appareil de coupure 104 est représenté à plus grande échelle sur la figure 3, un capot de la face avant 138 étant caché pour faciliter la lecture. L'appareil de coupure 104 comporte plusieurs compartiments 118 qui correspondent aux compartiments 18 précédemment décrits en référence à la figure 1. Dans l'exemple illustré, l'appareil de coupure 104 comporte trois compartiments 118. Chaque compartiment 118 comprend une chambre de coupure, non représentée, jouxtant les contacts séparables. Chaque chambre de coupure débouche sur une face supérieure 140 de l'appareil 104 par une ouverture de dégazage 142 qui sert à évacuer les gaz de coupure hors des chambres de coupure.

Les ouvertures 142 sont avantageusement orientées vers le haut pour faciliter l'évacuation des gaz de coupure. Avantageusement, les appareils de coupure 104 à 108 sont espacés les uns par rapport aux autres suivant une direction orthogonale à la face supérieure 140 de chacun des appareils 104 à 108, de manière à laisser libre les ouvertures de dégazage 142 de chacun des appareils de coupure 104 à 108 et ainsi éviter qu'un appareil de coupure 104 à 108 ne puisse obstruer une ouverture 142 d'un autre appareil de coupure 104 à 108. Dans l'exemple illustré, les appareils de coupure 104 à 108 sont espacés les uns par rapport aux autres suivant une direction horizontale.

Chaque appareil de coupure 104 à 106 comprend un arbre de commande 144, qui est disposé transversalement à l'appareil 104 à 106 correspondant et qui dépasse d'une face latérale 146 des appareils 104 à 108 par une extrémité 148 de l'arbre 144. L'extrémité 148 est donc située à l'extérieur de l'appareil 104 à 108 correspondant. Les contacts séparables d'un même appareil de coupure 104 à 108 sont ainsi couplés à un arbre 144 commun et sont conjointement commutés entre les états ouvert ou fermé sous l'action de l'arbre 144 correspondant.

Plus précisément, les arbres 144 ont chacun une forme de cylindre centré sur un axe, autour duquel les arbres 144 sont mobiles en rotation par rapport à l'appareil 104 à 108 correspondant, et les contacts séparables d'un des appareils de coupure 104 à 108 sont déplacés entre un état ouvert et un état fermé lorsque l'arbre 144 correspondant est déplacé en rotation. Lorsque tous les contacts séparables d'un des appareils de coupure 104 à 108 sont à l'état ouvert/fermé, on dit par extension que l'appareil de coupure 104 à 108 correspondant est aussi à l'état ouvert/fermé.

Les arbres de commande 144 de chaque appareil 104 à 108 sont couplés au dispositif mécanique 124 de liaison. Le dispositif mécanique 124 comprend une tringle de commande 125, qui est reliée à chacun des arbres de commande 144 par l'intermédiaire de leviers 150. La liaison entre un arbre 144, un levier 150 et la tringle 125 est mieux visible sur la figure 3.

Le levier 150 est monté, à une première extrémité, solidaire de l'arbre 144 au voisinage de l'extrémité 148 de l'arbre 144, tandis qu'une deuxième extrémité du levier 150 opposée de la première extrémité, est assemblée à la tringle 125 de manière pivotante autour d'un axe parallèle à l'axe de l'arbre 144 correspondant. Le dispositif mécanique de liaison 124 est donc situé à l'extérieur de chacun des appareils 104 à 108.

Les mouvements de translation de la tringle 125 sont ainsi transformés en mouvements de rotation de l'arbre 144. Les arbres 144 de tous les appareils de coupure 104 à 108 étant couplés par le dispositif mécanique 124, les mouvements de rotation d'un des arbres 144 sont reproduits par les autres arbre 144, de manière à ce que les contacts séparables situés au sein de chacun des appareils 104 à 108 sont conjointement déplacés entre les états ouvert ou fermé. Dit autrement, grâce au dispositif mécanique 124, la commutation des appareils de coupure 104 à 108 entre les états ouvert et fermé est simultanée.

Avantageusement, le châssis 128 et le dispositif mécanique 124 sont réalisés en un matériau non ferromagnétique, de préférence métallique, afin d'éviter la génération de phénomènes d'induction sous l'effet des courants électriques circulant dans le système de protection 2.

De préférence, une tringle de centrage 152 et un guide 154 sont prévus pour contribuer au bon fonctionnement du dispositif mécanique 124, en particulier pour maintenir le parallélisme des arbres 144 et l'alignement des extrémités 148, afin de réduire les frottements au sein du dispositif mécanique 124 et de réduire la force nécessaire pour déplacer en rotation les arbres 144.

La tringle de centrage 152 comporte des alésages, dans lesquels sont logés des paliers accueillant les extrémités 148 des arbres 144. Les arbres 144 sont ainsi guidés en rotation par rapport à la tringle 152 autour de leur axe respectif.

Le guide 154 est relié à un flasque 136 de chacun des appareils de coupure 104 à 108 du côté opposé à la face latérale 146. On comprend que la bielle de commande 125, la tringle de centrage 152 et le guide 154 s'étendent dans leur longueur selon des directions parallèles les unes aux autres, les appareils de coupure 104 à 108 étant ainsi alignés suivant une même direction. Plus précisément, les arbres 144 des appareils 104 à 108 sont parallèles entre eux, sont coplanaires, et les liaisons entre les leviers 150 et les arbres 144 correspondant sont alignées.

Un seul des appareils de coupure 104 à 108 comporte, en outre, un déclencheur.

Dans l'exemple illustré, le déclencheur 120 est monté sur l'appareil de coupure 104, qui est l'appareil de coupure situé sur le bas des figures 2 à 4. Le déclencheur 120 est de préférence logé dans un logement de réception prévu pour cet effet en façade d'un des appareils de coupure 104 à 108.

En variante non représentée, le déclencheur 120 est monté sur un autre des appareils des coupures 106 ou 108, voire déporté ailleurs que sur l'un des appareils de coupure 104 à 108.

Dans l'exemple illustré, l'appareil de coupure 104 comprend aussi un actionneur 156, représenté sur la figure 2, l'actionneur 156 étant piloté par le déclencheur 120.

L'actionneur 156 est conçu pour recevoir l'ordre de déclenchement provenant du déclencheur 120 et pour actionner un mécanisme à accumulation d'énergie, qui n'est pas représenté, ce mécanisme faisant pivoter l'arbre 144 de l'appareil 104, de manière à commuter les contacts séparables de l'appareil 104.

Le mouvement de rotation de l'arbre 144 de l'appareil 104 est transmis, par l'intermédiaire du dispositif mécanique 124, aux arbres 144 des autres appareils de coupure 106 et 108, séparant les contacts séparables des appareils 106 et 108.

Autrement dit, les appareils de coupure 104 à 108 sont asservis à un même déclencheur 120 commun, qui est ici placé sur ou dans l'appareil de coupure 104.

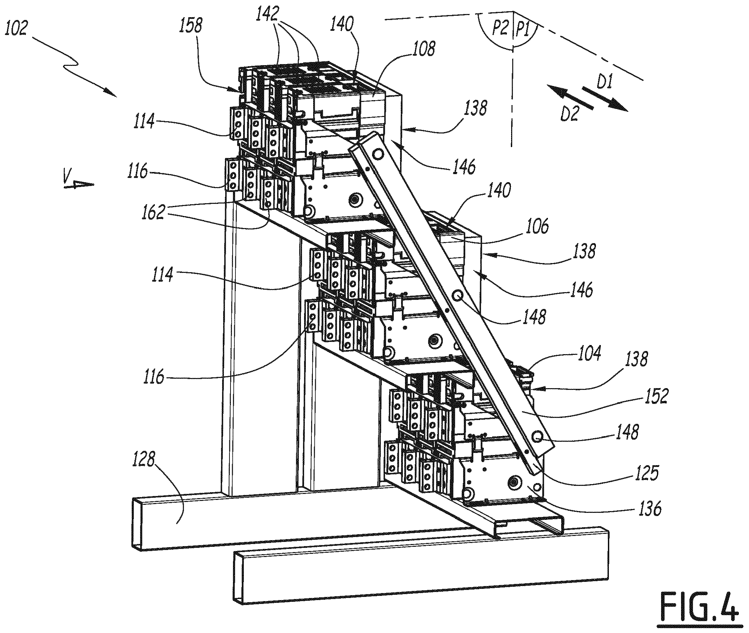

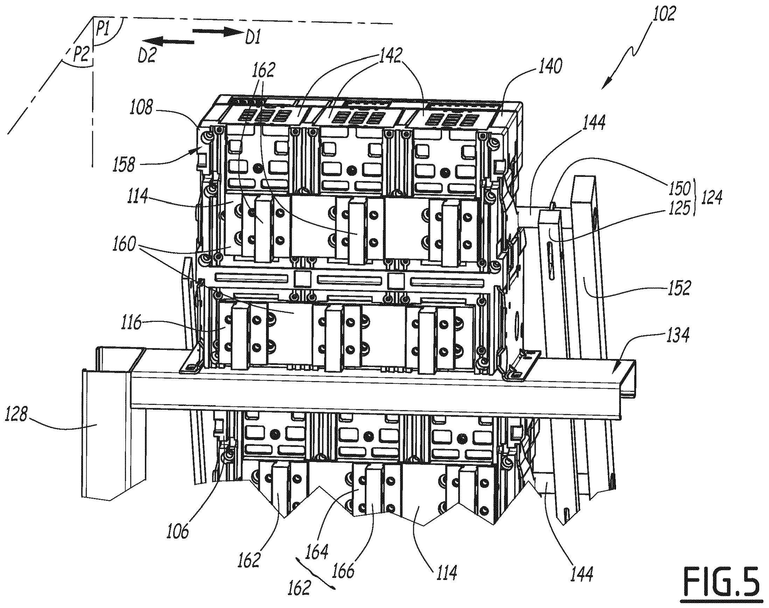

Les contacts séparables d'une chambre de coupure sont reliés à un connecteur amont 114 et à un connecteur aval 116, visibles sur les figures 4 et 5.

Dans l'exemple illustré, les connecteurs 114 et 116 sont situés sur une face arrière 158 de chacun des appareils 104 à 108, la face arrière 158 étant opposée de la face avant 138.

Les connecteurs amont 114 et aval 116 comprennent chacun une barre 160, de section rectangulaire, et des plots de raccordements 162 qui peuvent être rapportés sur ou intégrés à ladite barre 160. Dans l'exemple illustré, deux barres 160 sont montées transversalement sur la face arrière 158 de chacun des appareils 104 à 108, l'une au-dessus de l'autre, les barres 160 étant fixées aux appareils de coupure 104 à 108 au moyen d'organes de fixation, telles que des vis.

Chaque plot de raccordement 162 comprend une embase 164, fixée à une barre 160 respective aux moyens d'organes de fixation, et un barreau de fixation 166. Le barreau 166 présente ici une forme de pavé allongé, disposé verticalement dans sa longueur en saillie sur l'embase 164. Chaque barreau 166 comporte des alésages traversants, conçus pour coopérer avec d'autres organes de fixation d'une installation électrique, ces organes de fixation n'étant pas représentés.

Avantageusement, les connecteurs amont 114 et aval 116 présentent la même structure, les connecteurs amont 114 et aval 116 étant montés dans des directions opposées sur la face arrière 158 des appareils de coupure 104 à 108.

Par commodité, on définit une direction D1 comme étant une direction horizontale, située dans le plan transversal P1 et orientée dans le même sens que la face latérale 146, c'est-à-dire vers la droite de la figure 5. De façon analogue, on définit une direction D2 comme étant une direction parallèle à D1 et orientée dans la direction opposée, c'est-à-dire vers la gauche sur la figure 5.

Ainsi, dans l'exemple illustré sur la figure 5, les connecteurs 114 sont orientés suivant la direction D1, tandis que les connecteurs 116 sont orientés suivant la direction D2.

Par exemple, le connecteur aval 116 est retourné par rapport au connecteur amont 114, de manière à ce que les plots de raccordement 162 du connecteur amont 114 soient désalignés par rapport aux plots de raccordement 162 du connecteur aval 116.

De cette manière, les barreaux de fixation 166 des plots 162 ne font pas obstacle à la circulation des flux d'air à l'arrière de l'appareil. Cela facilite, par convection naturelle, l'évacuation de la chaleur générée par le courant électrique circulant au niveau de chaque plot 162.

Bien entendu, un système de convexion forcée par ventilation peut être prévu pour contribuer au refroidissement des appareils de coupure 104 à 108.

Par exemple, les barreaux de fixation 166 d'un même appareil 104 à 108 sont ainsi situés dans des plans verticaux parallèles aux plans P2 distincts les uns des autres.

Avantageusement, chaque connecteur amont 114 et aval 116 d'un appareil 104 à 108 comprend autant de plots 162 que l'appareil 104 à 108 correspondant comprend de chambres de coupure, chaque plot 162 étant aligné avec une chambre de coupure respective suivant un plan parallèle au plan longitudinal P2.

Dans l'exemple illustré, chaque appareil 104 à 108 comprend trois chambres de coupure, tandis que chacun des connecteurs 114 et 116 comprend trois plots de raccordement 162, alignés avec les trois chambres de coupure de l'appareil 104 à 108 correspondant.

Le fait d'avoir des plots 162 associés à chacune des chambres de coupure, ces plots 162 étant reliés entre eux par une barre 160, permet de réduire l'échauffement du plot 162 du milieu, c'est-à-dire celui des plots 162 situé entre les deux autres plots 162 du même connecteur 114 ou 116, est ainsi réduit par rapport à une situation dans laquelle les plots de raccordement 162 ne seraient pas reliés les uns aux autres par une barre 160.

On comprend que, dans le deuxième mode réalisation du système de protection 102, l'utilisation d'appareils de coupure 104 à 108 distincts les uns des autres, mais asservis à un même déclencheur 120 commun, permet de traiter, dans un volume relativement réduit, des courants d'intensité élevé grâce à bonne évacuation de la chaleur et des gaz de coupure.

De nombreux aspects du deuxième mode de réalisation peuvent être mis en oeuvre indépendamment du premier mode de réalisation. De même, le deuxième mode de réalisation peut être mis en oeuvre indépendamment du premier mode de réalisation.

En particulier, l'asservissement mécanique des appareils de coupure au déclencheur peut être mis en oeuvre indépendamment de l'asservissement électronique.

De plus, le châssis 128 peut être utilisé dans le système de protection 2 précédemment décrit et n'est pas exclusif au deuxième mode de réalisation.

En outre, les connecteurs 114 et 116, de même que leur structure et leur disposition, n'est pas exclusive au deuxième mode de réalisation et peut s'appliquer au système de protection 2 du premier mode de réalisation.

De façon générale, dans les différents modes de réalisation décrits ci-dessus, un seul déclencheur 20 ou 120 est nécessaire pour asservir les appareils de coupure 4 à 8 ou 104 à 108. Il est ainsi possible de fabriquer des systèmes de protection 2 ou 102 présentant des performances de coupure plus élevées, en utilisant des appareils de coupure comprenant des composants de disjoncteurs basse tension existants, sans avoir à concevoir de nouveaux composants spécifiques, ce qui est économiquement et industriellement avantageux.

Les modes de réalisation et les variantes mentionnées ci-dessus peuvent être combinés entre eux pour générer de nouveaux modes de réalisation de l'invention.

## Revendications

1. Système de protection (2 ;102) électrique multipolaire comportant une pluralité d'appareils de coupure (4, 6, 8 ; 104, 106, 108) d'un courant électrique, chaque appareil de coupure présentant une pluralité de compartiments (18 ; 118) comprenant chacun une chambre de coupure et une paire de contacts électriques séparables connectés à des bornes de raccordement amont (10) et aval (12), les contacts électriques séparables étant déplaçables entre des positions ouverte et fermée sous l'action d'un déclencheur (20 ; 120),
dans lequel les appareils de coupure sont séparés les uns des autres, et sont asservis à un même déclencheur (20 ; 120) commun,
dans lequel les bornes amont (10) de chaque appareil sont raccordées par un premier connecteur (14 ; 114) pour les porter à un même potentiel électrique,
dans lequel les bornes aval de chaque appareil sont raccordées par un deuxième connecteur (16 ; 116) pour les porter à un même potentiel électrique,
**caractérisé en ce que** les premiers et deuxième connecteurs (14, 16 ; 114, 116) d'un appareil de coupure (4, 6, 8 ; 104, 106, 108) sont situées sur une face arrière (158) de l'appareil, sont disposées transversalement l'un au-dessus de l'autre et comprennent chacun des plots de raccordement (162), chacun associé/connecté à une des bornes amont ou aval, chaque connecteur comprenant autant de plots de raccordement que l'appareil de coupure comprend de chambres de coupure (18 ; 118).

2. Système de protection (2 ;102) selon la revendication 1, **caractérisé en ce que** les premiers et deuxième connecteurs (14, 16; 114, 116) d'un appareil de coupure (4, 6, 8 ; 104, 106, 108) présentent la même structure et sont orientés suivant deux directions transversales opposées (D1, D2), les plots de raccordement des deux connecteurs d'un même appareil étant chacun situés dans des plans verticaux distincts les uns des autres.

3. Système de protection (2 ;102) selon l'une quelconque des revendications précédentes, **caractérisé en ce que** les appareils de coupure (4, 6, 8 ; 104, 106, 108) comportent un même nombre de chambres de coupure (18, 118).

4. Système de protection (2 ;102) selon la revendication précédente, **caractérisé en ce que** chaque appareil de coupure (4, 6, 8 ; 104, 106, 108) comprend deux, trois ou quatre chambres de coupure (18 ; 118).

5. Système de protection (2 ; 102) selon l'une quelconque des revendications précédentes, **caractérisé en ce que** chaque chambre de coupure d'un appareil de coupure (4, 6, 8 ; 104, 106, 108) débouche sur une face supérieure (140) de l'appareil de coupure par une ouverture de dégazage (142) respective, et **en ce que** les appareils sont espacés les uns par rapport aux autres suivant une direction orthogonale à la face supérieure (140) de manière à laisser libre les ouvertures de dégazage des autres appareils.

6. Système de protection (2) selon l'une quelconque des revendications 1 à 5, **caractérisé en ce que** chaque appareil de coupure (4, 6, 8) comporte un mécanisme de commutation pour déplacer les contacts séparables dudit appareil, lesdits mécanismes de commutation étant couplés au déclencheur (20).

7. Système de protection (2) selon la revendication précédente, **caractérisé en ce que** le déclencheur (20) fait partie d'une unité de commande électronique distincte des appareils de coupure (4, 6, 8).

8. Système de protection (2) selon l'une quelconque des revendications 6 ou 7, **caractérisé en ce que** le système comporte des embases d'accueil, prévues pour être fixées à une installation électrique, chaque embase comprenant des raccords électriques positionnés de manière à coopérer conjointement de façon réversible avec les connecteurs (14, 16) d'un appareil de coupure (4, 6, 8).

9. Système de protection (102) selon l'une quelconque des revendications 1 à 5, **caractérisé en ce qu'**un premier appareil de coupure (104, 106, 108) comporte un actionneur (156) et un mécanisme de commutation, les autres appareils de coupure étant couplés au premier appareil de coupure par un dispositif mécanique (124) disposé à l'extérieur des appareils et qui relie ces appareils entre eux.

10. Système de protection (102) selon la revendication précédente, **caractérisé en ce que** l'appareil de coupure (104, 106, 108) comportant l'actionneur (156) comporte aussi le déclencheur (120), qui pilote l'actionneur.

11. Système de protection (102) selon l'une quelconque des revendications 9 ou 10, **caractérisé en ce que** chaque appareil de coupure (104, 106, 108) comporte un arbre de commande (144) commun auquel sont couplés les contacts séparables, les arbres de chaque appareil étant couplés au dispositif mécanique (124).

12. Système de protection (102) selon l'une quelconque des revendications 9 à 11, **caractérisé en ce que** le système comprend un châssis (128) de fixation des appareils de coupure (104, 106, 108), et **en ce que** le châssis et le dispositif mécanique (124) sont réalisés en un matériau non ferromagnétique, de préférence métallique.

## Patentansprüche

1. Mehrpoliges elektrisches Schutzsystem (2;102), aufweisend eine Vielzahl von Schaltgeräten (4, 6, 8; 104, 106, 108) eines elektrischen Stroms, wobei jedes Schaltgerät eine Vielzahl von Abteilen (18; 118) aufweist, die jeweils eine Schaltkammer und ein Paar trennbarer elektrischer Kontakte umfasst, die mit vorgelagerten (10) und nachgelagerten (12) Anschlussklemmen verbunden sind, wobei die trennbaren elektrischen Kontakte mittels der Wirkung eines Auslösers (20; 120) zwischen einer geöffneten und geschlossenen Position verlagerbar sind,
wobei die Schaltgeräte voneinander getrennt sind und von demselben gemeinsamen Auslöser (20; 120) bedient werden,
wobei die vorgelagerten Klemmen (10) jedes Geräts durch einen ersten Verbinder (14; 114) angeschlossen sind, um sie auf dasselbe elektrische Potential zu bringen,
wobei die nachgelagerten Klemmen jedes Geräts durch einen zweiten Verbinder (16; 116) angeschlossen sind, um sie auf dasselbe elektrische Potential zu bringen,
**dadurch gekennzeichnet, dass** sich die ersten und der zweite Verbinder (14, 16; 114, 116) eines Schaltgeräts (4, 6, 8; 104, 106, 108) an einer Rückseite (158) des Geräts befinden, quer übereinander angeordnet sind und jeweils Anschlusspodeste (162) umfassen, jeweils zugeordnet/verbunden mit einer der vorgelagerten oder nachgelagerten Klemmen, wobei jeder Verbinder so viele Anschlusspodeste umfasst, wie das Schaltgerät Schaltkammern (18; 118) umfasst.

2. Schutzsystem (2; 102) nach Anspruch 1, **dadurch gekennzeichnet, dass** die ersten und der zweite Verbinder (14, 16; 114, 116) eines Schaltgeräts (4, 6, 8; 104, 106, 108) die gleiche Struktur aufweisen und in zwei entgegengesetzten transversalen Richtungen (D1, D2) ausgerichtet sind, wobei sich die Anschlusspodeste der zwei Verbinder desselben Geräts jeweils in vertikalen Ebenen befinden, die voneinander unterschiedlich sind.

3. Schutzsystem (2; 102) nach einem der vorangehenden Ansprüche, **dadurch gekennzeichnet, dass** die Schaltgeräte (4, 6, 8; 104, 106, 108) dieselbe Anzahl Schaltkammern (18, 118) aufweisen.

4. Schutzsystem (2; 102) nach vorangehendem Anspruch, **dadurch gekennzeichnet, dass** jedes Schaltgerät (4, 6, 8; 104, 106, 108) zwei, drei oder vier Schaltkammern (18; 118) umfasst.

5. Schutzsystem (2; 102) nach einem der vorangehenden Ansprüche, **dadurch gekennzeichnet, dass** jede Schaltkammer eines Schaltgeräts (4, 6, 8; 104, 106, 108) auf einer Oberseite (140) des Schaltgeräts durch eine jeweilige Entlüftungsöffnung (142) ausmündet und dass die Geräte in einer zur Oberseite (140) orthogonalen Richtung derart voneinander beabstandet sind, dass die Entlüftungsöffnungen der anderen Geräte frei bleiben.

6. Schutzsystem (2) nach einem der Ansprüche 1 bis 5, **dadurch gekennzeichnet, dass** jedes Schaltgerät (4, 6, 8) einen Umschaltmechanismus aufweist, um die trennbaren Kontakte des Geräts zu verlagern, wobei die Umschaltmechanismen mit dem Auslöser (20) verbunden sind.

7. Schutzsystem (2) nach vorangehendem Anspruch, **dadurch gekennzeichnet, dass** der Auslöser (20) Teil einer elektronischen Steuereinheit ist, die von den Schaltgeräten (4, 6, 8) unterschiedlich ist.

8. Schutzsystem (2) nach einem der Ansprüche 6 oder 7, **dadurch gekennzeichnet, dass** das System Empfangsflächen aufweist, die zur Befestigung an einer elektrischen Anlage vorgesehen sind, wobei jede Fläche elektrische Anschlüsse umfasst, die derart positioniert sind, dass sie gemeinsam reversibel mit den Verbindern (14, 16) eines Schaltgeräts (4, 6, 8) zusammenwirken.

9. Schutzsystem (102) nach einem der Ansprüche 1 bis 5, **dadurch gekennzeichnet, dass** ein erstes Schaltgerät (104, 106, 108) einen Aktuator (156) und einen Umschaltmechanismus aufweist, wobei die anderen Schaltgeräte mit dem ersten Schaltgerät durch eine mechanische Vorrichtung (124) verbunden sind, die außerhalb der Geräte angeordnet ist und das diese Geräte miteinander verbindet.

10. Schutzsystem (102) nach vorangehendem Anspruch, **dadurch gekennzeichnet, dass** das Schaltgerät (104, 106, 108), das den Aktuator (156) aufweist, auch den Auslöser (120) aufweist, der den Aktuator steuert.

11. Schutzsystem (102) nach einem der Ansprüche 9 oder 10, **dadurch gekennzeichnet, dass** jedes Schaltgerät (104, 106, 108) eine gemeinsame Steuerwelle (144) aufweist, mit der die trennbaren Kontakte verbunden sind, wobei die Wellen jedes Geräts mit der mechanischen Vorrichtung (124) verbunden sind.

12. Schutzsystem (102) nach einem der Ansprüche 9 bis 11, **dadurch gekennzeichnet, dass** das System ein Gestell (128) zum Befestigen der Schaltgeräte (104, 106, 108) umfasst und dass das Gestell und die mechanische Vorrichtung (124) aus einem nicht ferromagnetischen, vorzugsweise metallischen Material hergestellt sind.

## Claims

1. A multipolar electrical protection system (2; 102) including a plurality of devices (4, 6, 8; 104, 106, 108) for switching an electric current, each switching device having a plurality of compartments (18; 118) each comprising an extinguishing chamber and a pair of separable electrical contacts that are connected to upstream (10) and downstream (12) connection terminals, the separable electrical contacts being movable between open and closed positions under the action of a tripping device (20; 120),
wherein the switching devices are separate from one another, and are controlled by the same common tripping device (20; 120),
wherein the upstream terminals (10) of each device are connected by a first connector (14; 114) in order to keep them at a same electrical potential,
wherein the downstream terminals of each device are connected by a second connector (16; 116) in order to keep them at a same electrical potential,
**characterized in that** the first and second connectors (14, 16; 114, 116) of a switching device (4, 6, 8; 104, 106, 108) are located on a rear face (158) of the device, are arranged transversely one above the other and each comprise connection pads (162), each associated/connected with one of the upstream or downstream terminals, each connector comprising as many connection pads as the switching device comprises extinguishing chambers (18; 118).

2. The protection system (2; 102) according to claim 1, **characterized in that** the first and second connectors (14, 16; 114, 116) of a switching device (4, 6, 8; 104, 106, 108) have the same structure and are oriented in two opposite transverse directions (D1, D2), the connection pads of the two connectors of a same device each being located in vertical planes that are distinct from one another.

3. The protection system (2; 102) according to any one of the preceding claims, **characterized in that** the switching devices (4, 6, 8; 104, 106, 108) include the same number of extinguishing chambers (18; 118).

4. The protection system according to the preceding claims, **characterized in that** each switching device (4, 6, 8; 104, 106, 108) comprises two, three or four extinguishing chambers (18; 118).

5. The protection system (2; 102) according to any one of the preceding claims, **characterized in that** each extinguishing chamber of a switching device (4, 6, 8; 104, 106, 108) opens onto an upper face (140) of the switching device via a respective degassing opening (142), and **in that** the devices are spaced apart from one another in a direction orthogonal to the upper face (140) so as to leave the degassing openings free of the other devices.

6. The protection system (2) according to any one of claims 1 to 5, **characterized in that** each switching device (4, 6, 8) includes a switchover mechanism for moving the separable contacts of said device, said switchover mechanisms being coupled to the tripping device (20).

7. The protection system (2) according to the preceding claim, **characterized in that** the tripping device (20) forms part of an electronic control unit distinct from the switching devices (4, 6, 8).

8. The protection system (2) according to any one of claims 6 or 7, **characterized in that** the system includes receiving bases, intended for attachment to an electrical installation, each base comprising electrical connections that are positioned so as to reversibly cooperate together with the connectors (14, 16) of a switching device (4, 6, 8).

9. The protection system (102) according to any one of claims 1 to 5, **characterized in that** a first switching device (104, 106, 108) includes an actuator (156) and a switchover mechanism, the other switching devices being coupled to the first switching device by a mechanical device (124) that is arranged on the outside of the devices and connects these devices to one another.

10. The protection system (102) according to the preceding claim, **characterized in that** the switching device (104, 106, 108) that includes the actuator (156) also includes the tripping device (120), which drives the actuator.

11. The electrical protection system (102) according to any one of claims 9 or 10, **characterized in that** each switching device (104, 106, 108) includes a common control shaft (144) to which the separable contacts are coupled, the shafts of each device being coupled to the mechanical device (124).

12. The protection system (102) according to any one of claims 9 to 11, **characterized in that** the system comprises a frame (128) for the attachment of the switching devices (104, 106, 108), and **in that** the frame and the mechanical device (124) are made of a non-ferromagnetic, preferably metal material.
